# EUROPÄISCHE PATENTANMELDUNG

(11) **EP 1 780 407 A2**
(43) Veröffentlichungstag der Anmeldung: **02.05.2007**
(21) Anmeldenummer: 06020662.0
(22) Anmeldetag: 30.09.2006
(51) Int. Cl.: F03D 1/06

(54) **Rotorblatt für Windkraftanlagen**

(30) Priorität: 29.10.2005 DE 102005051931
(71) Anmelder: NORDEX ENERGY GmbH, 22848 Norderstedt (DE)
(72) Erfinder: Rockholz, Hermann, Dr.-Ing., 22848 Norderstedt (DE)
(74) Vertreter: Hauck Patent- und Rechtsanwälte

(57) **Zusammenfassung**

Rotorblatt für eine Windkraftanlage mit einer Oberschale und einer Unterschale, die miteinander verbunden sind und jeweils eine Hinterkante aufweisen, das ein in Strömungsrichtung verlaufendes Profil besitzt, das am hinteren Ende eine Profilhinterkante mit einer Dicke aufweist, wobei in mindestens einem Bereich des Rotorblatts die Hinterkanten von Ober- und Unterschale voneinander beabstandet sind derart, dass die Dicke der Profilhinterkante von einer der Schalen gebildet ist.

## Beschreibung

Die Erfindung betrifft ein Rotorblatt für Windkraftanlagen, mit dem in einfacher Weise besonders vorteilhafte Eigenschaften, insbesondere eine reduzierte Lärmentwicklung, erzielt werden.

Herkömmlich werden die Rotorblätter für Windkraftanlagen aus faserverstärkten Kunststoffen aufgebaut. Dabei wird zunächst eine Ober- und eine Unterschale aus faserverstärktem Kunststoff hergestellt und anschließend mindestens im Bereich der Vorderkante und der Hinterkante miteinander verklebt. In dieser Bauweise können leichte und stabile Rotorblätter mit weitgehend frei wählbarer Formgebung gefertigt werden.

Ein Problem stellt jedoch die mit dem Betrieb von Windkraftanlagen einhergehende Geräuschentwicklung dar. Diese Betriebsgeräusche entstehen zu einem wesentlichen Teil aus Windgeräuschen, die im Bereich der Rotorblatthinterkante verursacht werden, wo die entlang der Saugseite und der Druckseite des Rotorblatts vorbeiströmenden Luftmengen aufeinandertreffen und es zu Druckgradienten und Turbulenzen kommt. In DE 195 80 147 T1 wird zur Linderung dieses Problems die Einarbeitung eines flexiblen Materials, beispielsweise eines Elastomerstreifens, im Bereich der Profilhinterkante vorgeschlagen. Der Elastomerstreifen weist dabei einen rautenförmigen Querschnitt auf, dessen eines Ende sich in einen zwischen den beiden mit einer speziellen Profilierung versehenen Halbschalen ausbildenden Spalt einfügt. In ähnlicher Weise können auch Streifen gewebten oder gestrickten Stoffs eingearbeitet werden. Des weiteren ist in DE 197 43 694 A1 eine spezielle Profilierung der Rotorblatthinterkante angegeben, die ebenfalls zu einer Reduzierung des Lärmpegels beitragen soll. Diese Profilierung ist so ausgebildet, dass der Grad der Verjüngung des Rotorblatts in Richtung auf die Rotorblatthinterkante schrittweise zunimmt, ohne jedoch eine treppenartige Stufe auszubilden. Im Gegensatz dazu ist es aus DE 196 14 420 C2 bekannt, die Ober- und Unterseite der Rotorblatthinterkante mit einer treppenartigen Abstufung zu versehen. Alle zitierten Techniken haben gemein, dass sie vergleichsweise aufwendige Fertigungsmethoden erfordern.

Aufgabe der Erfindung ist, ein Rotorblatt bereitzustellen, das in geringem Maße Lärm erzeugt und im Bereich der Hinterkante mit geringem Fertigungsaufwand herzustellen ist.

Erfindungsgemäß wird diese Aufgabe gelöst durch ein Rotorblatt für eine Windkraftanlage mit einer Oberschale und einer Unterschale, die miteinander verbunden sind und jeweils eine Hinterkante aufweisen, und einem in Strömungsrichtung verlaufenden Profil, das am hinteren Ende eine Profilhinterkante mit einer Dicke aufweist, wobei in mindestens einem Bereich des Rotorblatts die Hinterkanten von Ober- und Unterschale voneinander beabstandet sind derart, dass die Dicke der Profilhinterkante von einer der Schalen gebildet ist.

Die Aufgabe wird also gelöst durch ein Rotorblatt mit einer Hinterkante, dessen Ober- und Unterschale miteinander verbunden sind und die jeweils eine Hinterkante aufweisen, wobei mindestens in einem Bereich des Rotorblatts eine der Hinterkanten der Schalen näher an der Hinterkante des Rotorblatts verläuft als die Hinterkante der anderen Schale. Die Hinterkante des Rotorblatts bezeichnet dabei den in bezug auf die Strömungsrichtung am weitesten hinten liegenden Teil des gesamten Rotorblatts. Je nach Ausgestaltung kann die Hinterkante des Rotorblatts mit einer der Hinterkanten der Ober- oder Unterschale zusammenfallen oder von einem weiteren, etwa streifenförmigen Bauteil gebildet werden.

Das Rotorblatt besteht erfindungsgemäß aus einer Ober- und einer Unterschale, die miteinander verbunden sind und jeweils zwischen Vorderund Hinterkante eine Tiefe aufweisen, wobei mindestens in einem Bereich des Rotorblatts eine der Schalen eine größere Tiefe als die andere Schale besitzt derart, dass eine der Schalen über die andere Schale übersteht.

Mit dieser Anordnung der Schalen gemäß der Erfindung kann vermieden werden, dass im Bereich der Hinterkante die Ober- und Unterschale übereinander liegen und durch dieses Übereinanderliegen zwangsläufig eine Dicke der Hinterkante resultiert, die mindestens der Summe der Materialstärken von Ober- und Unterschale und Verklebung entspricht. Dabei kann die Hinterkante des Rotorblatts selbst direkt von der Hinterkante einer der beiden Halbschalen gebildet werden, oder es können weitere Elemente für die Verbindung der beiden Halbschalen im Bereich der Hinterkante eingesetzt werden und dabei die eigentliche Hinterkante des Rotorblatts bilden. Derartige zusätzliche Elemente können eine Dicke aufweisen, die gering ist gegenüber der Dicke zweier übereinanderliegender, bündig abschließender Halbschalen, so dass durch die erfindungsgemäße Anordnung der Halbschalen insgesamt trotz des zusätzlichen Elements eine geringere Dicke der Hinterkante erreicht werden kann.

Die Erfindung beruht auf der Erkenntnis, dass eine möglichst dünne Rotorblatthinterkante für die Reduzierung der Windgeräusche wichtig ist. Als Richtwert für die maximale Dicke der Profilhinterkante eines Rotorblatts kann ein Wert von 1 bis 10 Promille, vorzugsweise 1 bis 5 Promille der Profiltiefe gelten. Bei einer Profiltiefe von beispielsweise einem Meter kommt dies für eine relative Profildicke von 2 Promille einer maximalen Dicke von ca. 2 mm gleich. In der herkömmlichen Bauweise, bei der die Oberschale und die Unterschale im Bereich der Hinterkante jeweils eine Dicke von beispielsweise einem Millimeter aufweisen und im Bereich der Hinterkante aufeinandergeklebt werden, läßt sich dieser Wert nur schwer erreichen, da über die Materialstärken der Schalen hinaus noch weitere Schichten, beispielsweise Klebstoff-, Lack- oder Gelcoat-Schichten, die Profilhinterkante verdicken.

Gemäß einer Ausgestaltung fällt die Hinterkante des Rotorblatts mit der Hinterkante der Oberschale zusammen. Dies bedeutet, dass die Hinterkante der Oberschale die Hinterkante des Rotorblatts bildet. Dadurch wird erreicht, dass die Dicke der Hinterkante des Rotorblatts von der Dicke der Hinterkante der Oberschale bestimmt wird. Es ist eine unmittelbare Verklebung der beiden Halbschalen im Bereich der Hinterkante vorgesehen. Dies führt zu einer besonders stabilen Anordnung, da sich insbesondere bei Rotorblattprofilen mit langen, dünnen Hinterkanten, wie sie in modernen Rotorblattprofilen eingesetzt werden, die Torsionsstabilität erhöht. Ein weiterer Vorteil besteht darin, dass der Materialeinsatz verringert werden kann. Es ist weiterhin gewährleistet, dass die Hinterkante eine gleichmäßige Dicke aufweist, die nur von der Dicke der Oberschale abhängt. Die Herstellung des Rotorblatts ist ohne zusätzlichen Fertigungsaufwand möglich.

Gemäß einer weiteren Ausgestaltung wird ein weiteres Bauteil entlang der Hinterkante des Rotorblatts verwendet, welches die Hinterkante des Rotorblatts bildet. Es fällt also die Hinterkante des zusätzlichen Bauelements mit der Hinterkante des Rotorblatts zusammen. In diesem Fall wird die Dicke der Rotorblatthinterkante allein von der Dicke der Hinterkante des zusätzlichen Bauelements bestimmt. Durch die erfindungsgemäße Anordnung der Hinterkanten der Ober- und Unterschale ist es möglich, die Dicke des zusätzlichen, beispielsweise rauten- oder streifenförmigen Bauelements, geringer zu halten als die Dicke der beiden in herkömmlicher Weise übereinanderliegenden und bündig miteinander abschließenden Hinterkanten der Ober- und Unterschale. Es ist also nicht erforderlich, die Hinterkanten der beiden Halbschalen mit einem besonderen, beispielsweise flach auslaufenden Profil zu versehen, um ein besonders dünnes streifenförmiges Element einfügen zu können.

Gemäß einer weiteren Ausgestaltung wird die sich an der Hinterkante der weiter von der Rotorblatthinterkante entfernten Halbschale ausbildende Stufe abgespachtelt, um ein strömungsgünstiges Profil im Bereich der Rotorblatthinterkante zu erzielen.

Gemäß einer weiteren Ausgestaltung wird die Hinterkante derjenigen Schale, die nicht die Dicke der Hinterkante des Rotorblatts bildet, derart angeschrägt, dass sie flächig an der Innenseite der anderen Schale anliegt. Dadurch wird vermieden, dass sich im Bereich der betreffenden Hinterkante eine Stufe ausbildet. Je nach Profilform kann auch eine vorteilhafte Verklebung erreicht werden.

Die Erfindung wird nachfolgend anhand eines Ausführungsbeispiels näher erläutert. Es zeigen:
- Fig. 1: ein Rotorblatt im Querschnitt,
- Fig. 2: eine Hinterkante eines erfindungsgemäßen Rotorblatts im Querschnitt,
- Fig. 3: eine Hinterkante eines weiteren Ausführungsbeispiels eines erfindungsgemäßen Rotorblatts im Querschnitt,
- Fig. 4: eine Hinterkante eines dem Stand der Technik entsprechenden Rotorblatts im Querschnitt.

Es werden für alle Figuren die gleichen Bezugszeichen verwendet.

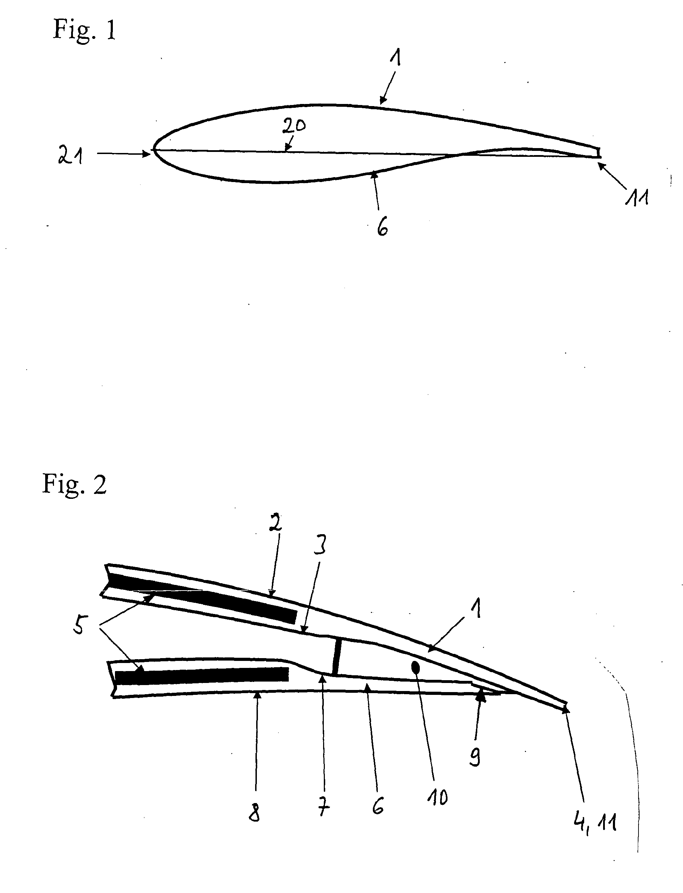

Das in Fig.1 im Querschnitt dargestellte Rotorblatt besteht aus einer Oberschale 1 und einer Unterschale 6. Das Profil wird nach hinten abgeschlossen von der Profilhinterkante 11. Die Vorderkante des Profils wird von der Profilnase 21 gebildet. Ebenfalls eingezeichnet ist die Profilsehne 20.

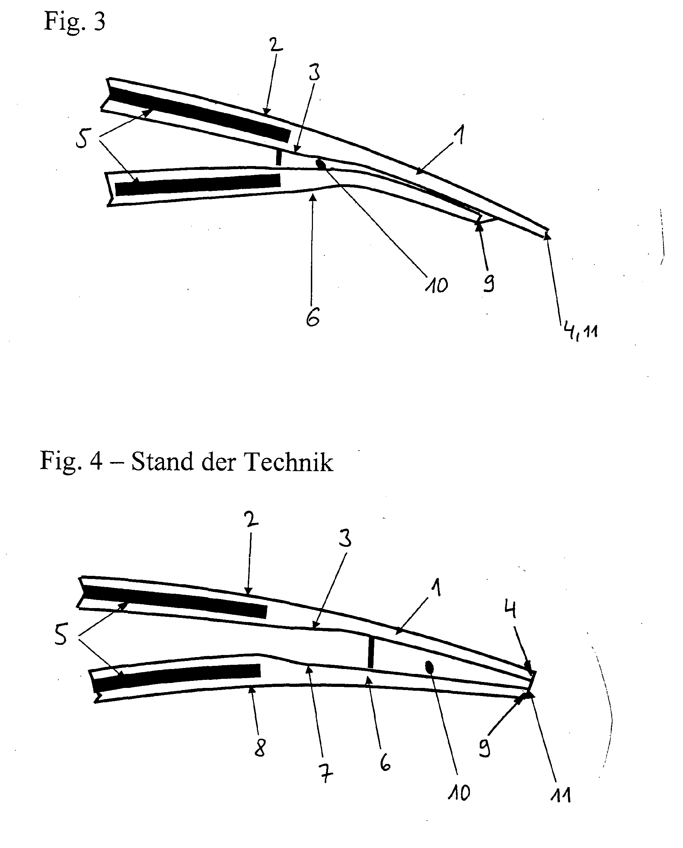

Die Fig. 4 gibt den Stand der Technik wieder und zeigt eine Rotorblatthinterkante im Querschnitt. Die Oberschale 1 weist eine Außenseite 2, eine Innenseite 3 und eine Hinterkante 4 auf und ist zum Teil mit einem Abstandsmaterial 5, beispielsweise Balsaholz oder Schaum, gefüllt. Gleiches gilt auch für die Unterschale 6 mit Innenseite 7, Außenseite 8 und Hinterkante 9. Der Bereich 10 zwischen den beiden Halbschalen 1, 6 wird zur Verbindung der Ober- und Unterschale 1, 6 mit Klebstoff aufgefüllt. Die Hinterkanten 4, 9 fallen beide mit der Profilhinterkante 11 zusammen. Die Dicke der Profilhinterkante 11 wird von beiden Hinterkanten 4, 9 gebildet. Sie ist deshalb mindestens doppelt so groß wie die Materialstärke der Schalen 1, 6 im Bereich der Hinterkante plus Klebstoff, welcher eine gewisse Dicke aufweisen muss.

Bei der in Fig. 2 dargestellten Hinterkante eines erfindungsgemäß ausgeführten Rotorblatts sind die Hinterkanten 4, 9 von Ober- und Unterschale nicht bündig miteinander verklebt, sondern so, dass die Hinterkante 9 der Unterschale 6 einen Abstand zur Profilhinterkante 11 aufweist. Die Hinterkanten 4, 9 sind derart voneinander beabstandet, dass die Dicke der Profilhinterkante 11 von der Hinterkante 4 der Oberschale 1 gebildet ist. Dadurch wird eine gleichmäßig geringe Dicke der Hinterkante des Rotorblatts erzielt.

Bei dem abgebildeten Rotorblatt besteht die Deckschicht der Schalenelemente aus glasfaserverstärktem Polyester- oder Epoxidharz. Die Verklebung der Schalen erfolgt unter Verwendung von Polyester-, Epoxid- oder Polyurethanharzen.

Fertigungstechnisch wird eine optimale Verbindung der Schalen dadurch erreicht, dass das Klebeharz auf eine der Schalen, vorzugsweise auf die Unterschale, aufgebracht wird, während diese sich noch in der Fertigungsform befindet. Die nicht mit dem Klebeharz versehene Schale befindet sich ebenfalls noch in ihrer Fertigungsform. Ober- und Unterschale werden dann aufeinander gelegt und aufeinander gepreßt, um eine möglichst dünne aber für eine feste Verbindung ausreichende Klebstoffdicke an der Hinterkante zu erreichen.

Das Aufeinanderpressen der Schalen wird beispielsweise durch Hydraulikzylinder, die einen hohen Druck ausüben, unterstützt.

In Fig. 3 ist die Hinterkante eines weiteren erfindungsgemäßen Rotorblatts dargestellt. Dieses Rotorblatt weist ein Profil auf, das durch eine besonders starke Wölbung im hinteren Bereich charakterisiert ist. Dies ist bei modernen Rotorblattprofilen häufig der Fall, beispielsweise bei den sogenannten Riso-Profilen.

Die Oberschale 1 und die Unterschale 6 verlaufen im Bereich der Hinterkante über einen größeren Bereich nahezu parallel. Dadurch kann die im Bereich 10 erforderliche Klebstoffmenge reduziert werden.

Ebenfalls gezeigt ist die abgespachtelte Stufe im Bereich der Hinterkante 9 der Unterschale 6. Im Vergleich zu Fig. 2 ist diese Hinterkante nicht schräg ausgeführt, wodurch Fertigungsaufwand eingespart werden kann.

## Patentansprüche

1. Rotorblatt für eine Windkraftanlage mit einer Oberschale (1) und einer Unterschale (6), die miteinander verbunden sind und jeweils eine Hinterkante (4, 9) aufweisen, das ein in Strömungsrichtung verlaufendes Profil besitzt, das am hinteren Ende eine Profilhinterkante (11) mit einer Dicke aufweist, **dadurch gekennzeichnet, dass** in mindestens einem Bereich des Rotorblatts die Hinterkanten (4, 9) von Ober- und Unterschale (1, 6) voneinander beabstandet sind derart, dass die Dicke der Profilhinterkante (11) von einer der Schalen gebildet ist.

2. Rotorblatt für eine Windkraftanlage mit einer Oberschale (1) und einer Unterschale (6), die miteinander verbunden sind und jeweils eine Hinterkante (4, 9) aufweisen, das ein in Strömungsrichtung verlaufendes Profil besitzt, das am hinteren Ende eine Profilhinterkante (11) mit einer Dicke aufweist, **dadurch gekennzeichnet, dass** ein weiteres, streifenförmiges Bauteil vorgesehen ist, das die Dicke der Profilhinterkante (11) bildet, wobei die Hinterkanten (4, 9) von Oberund Unterschale (1, 6) voneinander beabstandet sind derart, dass sie einen unterschiedlichen Abstand von der Profilhinterkante (11) aufweisen.

3. Rotorblatt gemäß Anspruch 1, **dadurch gekennzeichnet, dass** die Dicke der Profilhinterkante (11) von der Oberschale (1) gebildet ist.

4. Rotorblatt gemäß Anspruch 2, **dadurch gekennzeichnet, dass** die Hinterkante (9) der Unterschale (6) einen größeren Abstand von der Profilhinterkante (11) aufweist als die Hinterkante (4) der Oberschale (1).

5. Rotorblatt gemäß Anspruch 1, **dadurch gekennzeichnet, dass** eine Stufe im Bereich der Hinterkante derjenigen Schale, die nicht die Dicke der Profilhinterkante bildet, abgespachtelt ist.

6. Rotorblatt gemäß Anspruch 2, **dadurch gekennzeichnet, dass** die sich im Bereich der Hinterkante (4) der Oberschale (1) und/oder der Hinterkante (9) der Unterschale (6) ausbildende Stufe abgespachtelt ist.

7. Rotorblatt gemäß Anspruch 1, **dadurch gekennzeichnet, dass** die Hinterkante derjenigen Schale, die nicht die Dicke der Profilhinterkante (11) bildet, derart angeschrägt ist, dass sie flächig an der Innenseite der anderen Schale anliegt.
